# EUROPÄISCHE PATENTSCHRIFT

(11) **EP 2 823 429 B1**
(45) Veröffentlichungstag und Bekanntmachung des Hinweises auf die Patenterteilung: **29.05.2019**
(21) Anmeldenummer: 13707304.5
(22) Anmeldetag: 14.02.2013
(51) Int. Cl.: G06F 21/34, G06F 21/57, G06F 21/31, H04L 29/06

(54) **PC ABSICHERUNG DURCH BIOS/(U) EFI ERWEITERUNGEN**
PC SECURITY USING BIOS/(U)EFI EXTENSIONS
PROTECTION D'UN PC PAR DES EXTENSIONS DE BIOS/(U) EFI

(30) Priorität: 06.03.2012 DE 102012101876
(43) Veröffentlichungstag der Anmeldung: 14.01.2015
(73) Patentinhaber: Wincor Nixdorf International GmbH, 33106 Paderborn (DE)
(72) Erfinder: VON DER LIPPE, Carsten, 33098 Paderborn (DE); KRUMMEL, Volker, 33098 Paderborn (DE)
(86) Internationale Anmeldenummer: PCT/EP2013/052965
(87) Internationale Veröffentlichungsnummer: WO 2013/131728

(56) Entgegenhaltungen:
- EP-A1- 2 287 733
- WO-A1-2008/107008
- US-A- 4 819 267
- US-A- 5 060 263
- US-A1- 2004 111 633
- US-A1- 2007 022 243
- US-A1- 2007 135 092
- US-A1- 2007 255 934
- US-B1- 6 374 352
- "Technical Details on Microsoft Product Activation for Windows XP", INTERNET CITATION, 13. August 2001 (2001-08-13), XP002398930, Gefunden im Internet: URL:http://www.microsoft.com/technet/prodt echnol/winxppro/evaluate/xpactiv.mspx [gefunden am 2006-09-14]

## Beschreibung

### Die Erfindung betrifft:

Die Erfindung betrifft ein Verfahren und ein System zur Prüfung der Systemintegrität eines SB-Automaten mit Hilfe eines mobilen Endgerätes.

### Gebiet der Erfindung:

Die Steuerung moderner Geldautomaten oder SB-Automaten (Selbstbedienungsautomaten) erfolgt dem Stand der Technik nach mittels eines handelsüblichen PCs, auf dem ein Standardbetriebssystem, z.B. Microsoft Windows XP, läuft. Andere Betriebssysteme sind natürlich denkbar, wie Linux/Unix oder andere Windows Versionen. Diese Standardkomponenten sind in erster Linie für einen Arbeitsplatz vorgesehen und erfüllen im Wesentlichen nicht die Sicherheitsansprüche im Geldausgabeautomatenumfeld. Insbesondere kann über bekannte Sicherheitslücken Schadsoftware auf den Steuerrechner aufgespielt werden, um unberechtigterweise Kundendaten zu ermitteln. Da laufend neue Sicherheitslücken in derartigen Betriebssystemen aufgedeckt werden, muss die Unversehrtheit der Software auf dem Steuerrechner geprüft werden.

Für ein ganzheitliches Konzept zur Abwehr von Angriffen auf einen SB-Automaten/ATM (Geldautomaten) ist es für verschiedene Szenarien notwendig, dass der PC geschützt wird.

Derartige Angriffsszenarien auf den PC kann man grob in drei Kategorien unterteilen:
Kategorie I: Angriff von extern ohne direkten Zugriff auf PC-Schnittstellen, z. B. über das Internet.
Kategorie II: Angriffe bei denen der Angreifer Zugriff auf die Schnittstellen (USB, Netzwerk, Strom) des PCs bekommt, z. B. durch Aufbrechen der Fascia.
Kategorie III: Angriffe bei denen der Angreifer vollständige Kontrolle über den PC bekommt, also auch beliebige Manipulationen innerhalb des PC Gehäuses durchführen kann.

Die im Folgenden beschriebenen Verfahrensweisen dienen primär zum Schutz von Angriffen der Kategorie II, sind darauf aber nicht beschränkt, wenn z.B. Vorbereitungen für die anderen Kategorien getroffen werden sollen.

### Beispiele für derartige Angriffe sind:

- Anschließen eines USB Datenträgers und Booten eines selbständigen Betriebssystem von diesem, um Informationen von der Systeminstallation abzuziehen.
- Anschließen eines USB Datenträgers und Booten eines selbständigen Betriebssystem von diesem, um von diesem PC aus die Peripheriegeräte zu manipulieren, z. B. um aus dem Vereinzler unautorisiert Geld auszuzahlen.
- Anschließen eines USB Datenträgers und Booten eines selbständigen Betriebssystem von diesem, um die Installation auf dem System PC zu manipulieren, z. B. um einen eigenen Code einzuschleusen, der PINs aufzeichnet.

Die Benutzung existierender Sperren ist in der Praxis nicht praktikabel. Beispielsweise verfügen heutige PCs schon über die Fähigkeit über eine BIOS Einstellung zu verbieten, dass von einem externen Medium gebootet werden kann (unter einem externen Medium wird hierbei jedes Medium verstanden, von dem gebootet werden kann, ohne dass das Gehäuse vom PC geöffnet werden muss, dazu gehören auch CDs in eingebauten CD-ROM-Laufwerken). Diese Einstellung kann mittels BIOS Passwort abgesichert werden, um nicht autorisierte Änderungen zu verhindern. Eine derartige Praxis ist jedoch nur mit individuellen Passwörtern sinnvoll, denn wenn bei einer Bank alle PCs mit dem gleichen Passwort abgesichert sind, welches dann einem größeren Personenstamm (Servicetechniker, Administratoren) kenntlich gemacht werden muss, so ist davon auszugehen, dass dieses Passwort innerhalb kürzester Zeit allgemein bekannt ist.

Bei individuellen (aber statischen) Passwörtern pro PC muss organisatorisch geklärt werden, wie die Passwörter geheim zu halten sind. Hier besteht die Gefahr, dass die Servicetechniker z. B. die Passwörter sofort am System speichern (mit Edding aufs Gehäuse schreiben), damit es beim nächsten Besuch sofort bekannt ist. Wenn die individuellen Passwörter in Listen administriert werden, besteht wiederum sehr schnell die Gefahr, dass diese Listen über den eigentlich notwendigen Verteilerkreis bekannt werden. Zudem müssen diese Listen regelmäßig gepflegt werden.

Ganz Abschalten darf man den Zugriff zum BIOS nicht, da es ansonsten nicht mehr möglich ist den PC neu zu konfigurieren, z. B. nach einem Plattendefekt.

Das BIOS (von englisch "basic input/output system") ist die Firmware bei x86-PCs. Es ist in einem nichtflüchtigen Speicher auf der Hauptplatine eines PC abgelegt und wird unmittelbar nach dessen Einschalten ausgeführt. Aufgabe des BIOS ist es unter anderem, den PC zunächst funktionsfähig zu machen und im Anschluss das Starten eines Betriebssystems einzuleiten. Es ist zu beachten, dass es alternative Formen eines BIOS geben kann wie z.B. BIOS /(U) EFI, die ebenfalls unter die Anmeldung fallen.

Die WO 2008/107008 A1 zeigt ein ONE-Time-Passwort im Bereich des Online-Bankings.

Die US 2 zeigt ein komplexeres Passwort für ein BIOS. Allerdings wird bei der D2 lediglich zusätzlich noch die Seriennummer das Passwort integriert bzw. beim Zugriff auf das Passwort abgefragt. Das Passwort in der D2 somit völlig Zeit und Ereignis unabhängig.

Im flüchtigen Sprachgebrauch wird der Ausdruck BIOS heute manchmal auch in der Bedeutung BIOS-Einstellungen verwendet.

### Übersicht über die Erfindung:

Die BIOS/(U)EFI Software, der in SB-Automaten/ATMs verwendeten PCs wird erweitert, sodass es nebst der bisherigen Funktionalität eines statischen Passwortes auch die Möglichkeit des Schutzes über ein One-Time-Passwort (OTP) gibt. Mithilfe dieses Mechanismus können die BIOS Einstellungen, die beispielsweise die Bootreihenfolge steuern, geschützt werden, dass diese Einstellungen nur dann zur Verfügung stehen, wenn das OTP korrekt eingegeben wurde.

Im Einzelnen handelt es sich um ein Verfahren zur Steuerung des Zugriffs auf das BIOS oder von Teilfunktionen des BIOS eines SB-Automaten, wobei das Passwort des BIOS über einen deterministischen Algorithmus berechnet wird, in den über die Zeit verändernde Codeerzeugungs-Informationen einfließen. Bei diesem Algorithmus handelt es sich z.B. um einen deterministischen/kryptografischen Zufallszahlengenerator. Dieser erzeugt bei Eingabe eines sogenannten "seeds" /"Saat" Pseudozufallszahlen und wird daher in der Regel Pseudozufallszahlengenerator genannt (engl. pseudo random number generator, PRNG). Er erzeugt eine Zahlenfolge, die zwar zufällig aussieht, es aber nicht ist, da sie durch einen deterministischen Algorithmus berechnet wird. Solche Pseudozufallszahlen sind von Computern wesentlich einfacher zu erzeugen als echte Zufallszahlen und sind heute in vielfältigen Ausprägungen verfügbar (Als Eingabewert kann hier z.B. die aktuelle Zeit gewählt werden).

Bei jedem Start der Zufallszahlenberechnung mit gleichem Startwert, der so genannten Saat (engl. seed), wird die gleiche pseudozufällige Zahlenfolge erzeugt, weshalb diese deterministisch erzeugten Pseudozufallszahlen bei hinreichender Kenntnis der Seeds später reproduziert werden können.

In diese Seeds fließen z.B. die Systemzeit oder Zähler ein, die sich über die Zeit verändern. Auch kann es sich um Speicherbereiche handeln, die einer ständigen Veränderung unterliegen. Wichtig hierbei ist, dass Seed ausreichen genügend Komplex ist bzw. Entropie enthält, die einen Brute-Force-Angriff verhindern.

### Das Verfahren umfasst die Schritte:

- Anzeigen von den sich über die Zeit verändernden Codeerzeugungs-Informationen auf einem Bildschirm des SB-Automaten bei einem Zugriff auf das BIOS des SB-Automaten. Im Falle, dass der Benutzer beim Booten durch Drücken einer Funktionstaste in das BIOS gelangen will, so wird die Codeerzeugungs-Information angezeigt, die in den Algorithmus zur Erzeugung des Passworts einfließt. Bezogen auf den deterministischen Algorithmus, wie er oben beschrieben wurde ist die Codeerzeugungs-Information der Eingabeparameter für die Zufallszahlenfunktionen.

Die Codeerzeugungs-Information wird in ein Programm auf einem zweiten Computer, der ebenfalls den deterministischen Algorithmus zur Berechnung des Passworts für das BIOS aufweist, eingegeben, um so das Passwort auf dem zweiten Computer zu berechnen.

Nach Eingabe des Passworts auf dem SB-Automaten erfolgt eine Überprüfung des Passworts durch den deterministischen Algorithmus, um bei einem richtigen Passwort den Zugriff auf das BIOS zu erlauben.

Vorzugsweise sind die Codeerzeugungs-Informationen eine Ziffern-/Zahlenkombination, die aus einem oder mehreren der folgenden Komponenten zusammengesetzt sind: der Seriennummer-ID des SB-Automaten, der Uhrzeit, dem Datum, Hardwaremerkmalen des SB-Automaten.

Das Programm zur Erstellung des Passworts ist auf dem zweiten Computer auf einem Crypto -Stick, auch CrypTA-Stick genannt, abgelegt, der das Programm verschlüsselt speichert. Ein solcher Crypto-Stick weist in der Regel einen Crypto-Prozessor auf, der Daten verschlüsselt und falls notwendig auf einem Speicherbereich abgelegt. Um an diese Daten heranzukommen, bedarf es einer Authentifizierung. Nach der Authentifizierung werden das Programm bzw. die Daten, die auf dem Speicherbereich liegen, entschlüsselt und ein Zugriff auf die Daten wird möglich. So kann z.B. auch das Programm bereichsweise nach dem Laden im Speicher verschlüsselt sein, und das Programm entschlüsselt sich mit Hilfe des Cryptoprozessors, der auf dem Crypto-Stick vorhanden ist, während der Ausführung selber. Somit wird es erschwert, dass ein Speicherbereich während der Ausführung ausgelesen wird, um den Algorithmus zu entschlüsseln. Auch ist es denkbar, dass eine Überprüfung mit einem Debugger deaktiviert wird und das erkannt wird, wenn eine Virtualisierung benutzt wird, die es erleichtert Speicherbereiche auszulesen. Sollte eine Virtualisierung erkannt werden, so kann zum Beispiel der Programmstart unterbunden werden.

Der Begriff Crypto-Stick ist nicht limitierend zu verstehen. Es können unter den Begriff ebenfalls Dongle-Fallen, die keinerlei beschreibbaren Speicher aufweisen, sondern lediglich einen Logikablauf zulassen.

Somit ist sichergestellt, dass das Programm auf dem zweiten Computer nur ausgeführt werden kann, wenn der Crypto-Stick mit dem zweiten Computer verbunden ist, damit sich das Programm selber entschlüsseln kann. Eine getrennte Nutzung des Programms wird somit erschwert.

In einer bevorzugten Ausführungsform kann zusätzlich bei der Erzeugung des Passworts ein asymmetrisches Verschlüsselungsverfahren oder Signaturverfahren zum Einsatz kommen, wobei der SB-Automat über den öffentlichen Schlüssel verfügt, mit dem das Passwort verifiziert werden kann, wobei sich der geheime Schlüssel auf dem abgesicherten Crypto-Stick befindet, auf den das Programm Zugriff hat. Somit kann eine Signatur überprüft werden, und es kann sichergestellt werden, dass ein Missbrauch vorliegt.

Die Zugriffssteuerung kann grundsätzlich das gesamte BIOS bzw. den Zugriff auf die BIOS Funktionen steuern oder auch Teilfunktionen davon. So kann zum Beispiel ein Passwort für das Ändern der Art des Passwortzugangs zu den BIOS/(U)EFI Einstellungen verlangt werden.

Oder bei einer Änderung der Bootreihenfolge, bzw. generelle Ermöglichung des Bootens von externen Speichermedien, kann ebenfalls ein Passwort verlangt werden. Auch ist es denkbar, dass bei einem Austausch einer Festplatte eine Überprüfung und Anpassung der BIOS Daten zu erfolgen hat, die dann durch ein Passwort gesteuert werden.

Wobei das Passwort Informationen über die Identität des Programms oder dessen Nutzer enthält. So können zum Beispiel Benutzeridentität und die Identität des Programms anhand des Crypto-Sticks bestimmt werden und durch eine entsprechende Signatur dargestellt werden, so dass diese Zusatzinformationen an das Passwort angehängt werden, um dann dem SB-Automaten zu ermöglichen diese Daten separat zu speichern. Hierdurch ist es denkbar ein entsprechendes Zugriffsprotokoll anzulegen.

Das Protokoll kann Uhrzeit/Datum und das Passworts umfassen, wobei diese Informationen in einem Problemfall nachvollzogen werden können, um vorzugsweise auch über ein weiteres Programm, das auf dem installierten Betriebssystem des SB-Automaten läuft, abgefragt werden zu können. Dieses Programm, das auf dem Betriebssystem des SB Automaten läuft, kann in der Regel Remote von einem zentralen Server abgefragt werden, sodass es nicht notwendig ist, einen Service-Ingenieur zu der Maschine zu schicken.

Es versteht sich, dass es nicht unbedingt notwendig ist, dass das Programm lokal auf einem Rechner, der räumlich vor dem ATM steht, ausgeführt wird. So kann nach Übermittlung der für die Passworterzeugung notwendigen Informationen an eine zentrale Stelle das Passwort durch diese zentrale Stelle erzeugt werden. Denkbare Lösungen sind, dass sich der Serviceingenieur auf einen entfernten Server einloggt, der Zugriff auf das Programm und den Crypto-Stick bereitstellt. Dieses Einloggen ist somit personalisiert, wodurch die Identität festgestellt werden kann. Alternativ ist natürlich auch ein Anruf bei einer Zentrale möglich, um einer Person die Daten zu übermitteln, die für eine Passworterzeugung notwendig sind. Die Person teilt dann dem Serviceingenieur das Passwort mit, mit dem sich der Service-Ingenieur einloggen kann.

In einer weiteren Ausführungsform werden nach erfolgreichen Änderung der BIOS- Einstellungen und einem Starten des Rechners mit den neuen BIOS-Einstellungen, die BIOS Einstellungen automatisch beim nächsten Bootvorgang oder nach einer definierten Mindestzeitspanne t (Zeitraum) auf Standardwerte zurückgesetzt. Diese Standardwerte legen z.B. die Bootreihenfolge fest. Durch diesen Ansatz kann vermieden werden, dass nach Ändern der BIOS Einstellungen diese dauerhaft abgelegt werden und ein Missbrauch in der Zukunft ermöglicht wird, weil der Service-Ingenieur vergessen hat, diese auf ihren ursprünglichen Zustand zurückzusetzen.

In einer weiteren Ausführungsform kann das BIOS ein Zurücksetzen der Booteinstellungen oder des PW- Schutzes bei jedem Booten auf die Standardeinstellungen vornehmen.

Auch ist es denkbar, dass das Passwort nur für einen definierten Zeitraum gültig ist oder für eine bestimmte Anzahl von Bootvorgängen, beispielsweise wenige Stunden oder einen Tag und/oder einen Bootvorgang.

Ein weiterer Teil der Erfindung ist ein SB-Automat der ein BIOS aufweist, das das og. Verfahren implementiert.

Der SB-Automat ist mit einem BIOS versehen, das mit einem Passwortschutz versehen ist, um eine Steuerung des Zugriffs auf das BIOS oder von Teilfunktionen des BIOS zu ermöglich, wobei das Passwort des BIOS über einen deterministischen Algorithmus berechnet wird, in den über die Zeit verändernde Codeerzeugungs-Informationen einfließen.

Der SB-Automat weist eine Anzeige auf, auf der bei einem Zugriff auf das BIOS sich über die Zeit verändernde Codeerzeugungs-Informationen angezeigt werden, die in die Berechnung des Passworts einfließen. Der Serviceingenieur hat somit die Möglichkeit diese Informationen abzulesen. Es kann auch in einer besonderen Ausführung ausreichen, dass eine Seriennummer und ein Zeitraum in die Berechnung einfließt. Z.B. Seriennummer xyz und Datum 24.12.2011. Wenn die Uhrzeit und das Datum des SB-Automaten synchronisiert sind, so kann eine entsprechende Berechnung vorgenommen werden, ohne dass eine Anzeige von Informationen notwendig ist. In diesem Falle wäre das Passwort dann einen Tag zulässig.

Weiterhin umfasst der SB-Automat Eingabemittel, die die Eingabe des Passworts erlauben, wobei das Passwort, das auf einem zweiten Rechner mit Hilfe der Codeerzeugungs-Informationen berechnet wurde, überprüft wird, indem die angezeigten Codeerzeugungs-Informationen in einen deterministischen Algorithmus einfließen, sodass ein Passwort zulässig ist, das sich über die Zeit verändert.

### Figuren Beschreibung:

Fig. 1 zeigt den schematischen Aufbau eines SB-Automaten (ATM);
Fig. 2 zeigt den Zugriff und eine Teilfunktion des BIOS;
Fig. 3a zeigt die Erstellung eines Passworts entfernt von einem SB-Automaten;
Fig. 3b zeigt die Erstellung eines Passworts in der Nähe des SB-Automaten;
Fig. 4 zeigt den Ablauf des Verfahrens auf dem SB-Automaten und einem Rechner;

### Detaillierte Beschreibung:

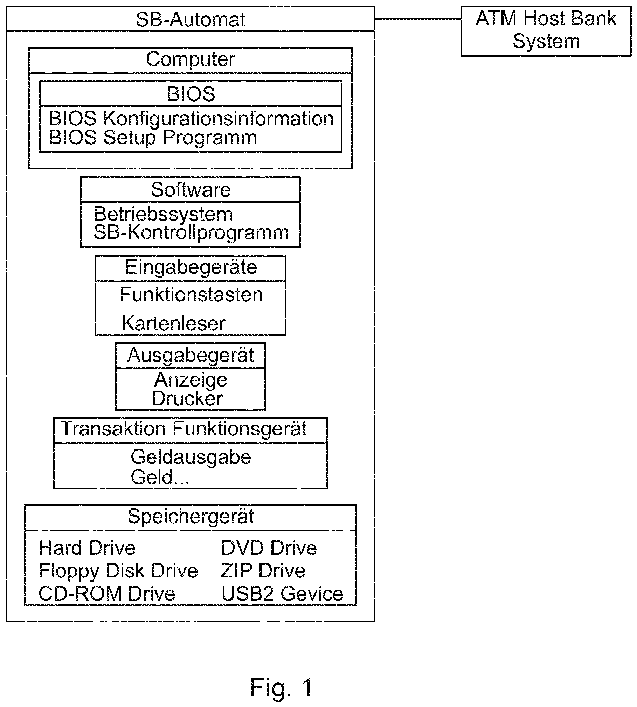

Fig. 1 zeigt den grundsätzlichen Aufbau eines SB-Automaten, der im vorliegenden Fall ein Geldautomat (ATM) ist.

Der Automat umfasst einen Computer, der wiederum ein BIOS aufweist. Das BIOS umfasst Konfigurationsinformationen und ein BIOS- Setupprogramm. Auf dem Computer läuft eine Software umfassend ein Betriebssystem und auf diesem ein spezielles SB- Automaten-Kontrollprogramm, das die Funktionalität des Automaten bereitstellt. Der Automat ist mit Eingabegeräten wie Tastaturen und Kartenlesern versehen und weist eine Anzeige und einen Drucker auf. Weiterhin sind Transaktionsfunktionsgeräte vorhanden, wie zum Beispiel eine Geldausgabe und eine Geldannahmeeinheit. Weiterhin umfasst der SB Automat Festplatten, Floppy-Laufwerke, CD-ROM-Laufwerke, DVD-Laufwerke, USB Anschlüsse usw. Weiterhin ist der SB Automat in der Regel über ein Netzwerk mit einem Host Bank System verbunden, das die Automaten steuert und überwacht.

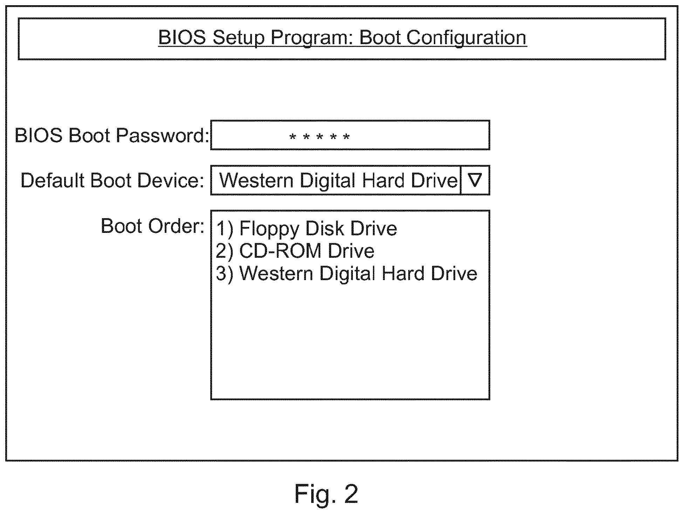

Die Figur 2 zeigt einen Bildschirmausdruck eines BIOS Setupprogramms, das die Boot- Konfiguration steuert. Hierbei wird die Reihenfolge der Bootgeräte festgelegt. Als Erstes erfolgt ein Booten vom Floppy Laufwerk, dann von einem CD-ROM-Laufwerk abschließend über eine Festplatte. Dieser Bereich ist durch ein Passwort in der vorliegenden Ausführungsform gesichert.

Es ist hierbei von den individuellen Schutzanforderungen abhängig, ob durch das OTP (one time password) eine oder mehrere der folgenden Einstellungen des BIOS/(U)EFI abgesichert werden:
- Zugang in die BIOS/(U)EFI Einstellungen
- Ändern der Art des Passwortzugangs zu den BIOS/(U)EFI Einstellungen
- Ändern der Bootreihenfolge, bzw. generelle Ermöglichung des Bootens von externen Speichermedien.

Möchte nun ein Servicetechniker die BIOS- Einstellungen ändern, z. B. um ein Betriebssystem neu zu installieren, drückt er beim PC- Start die entsprechende Tastaturkombination, um in die BIOS Einstellungen zu gelangen. Dann wird er aufgefordert das OTP einzugeben. Hierzu wird ihm auf dem Bildschirm eine Ziffern-/Zahlenkombination angezeigt, die aus der Seriennummer/UID, der Uhrzeit/Datum und gegebenenfalls weiteren HW Merkmalen des PCs besteht.

Diese Ziffern-/Zahlenkombination trägt er in ein weiteres/zweites Programm ein (im weiteren OTP Generator genannt), welches beispielsweise auf seinem Notebook/PDA/Handy läuft.

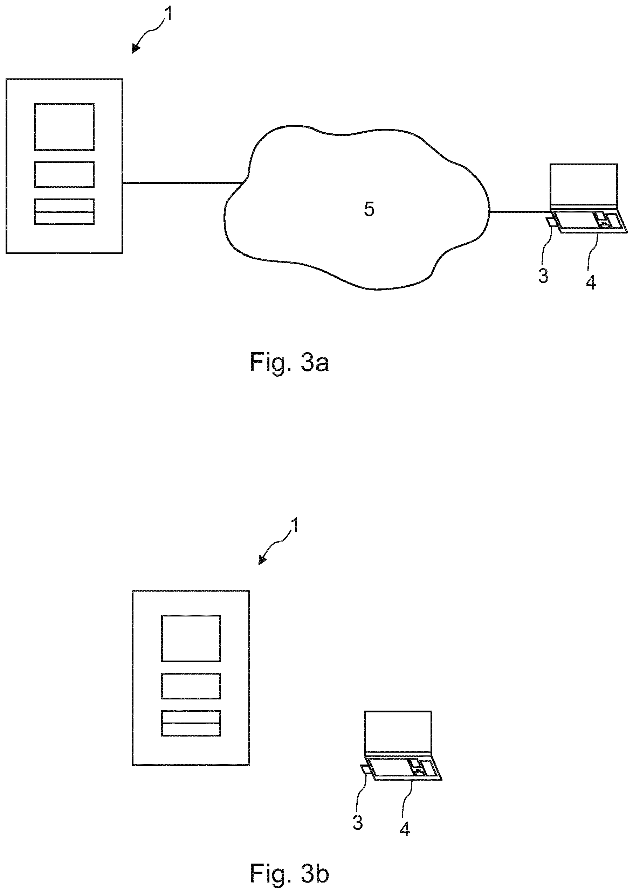

Die Fig. 3b zeigt eine Fallkonstellation, bei der ein Laptop 2 mit einem Crypto-Stick versehen ist, wobei der ATM 1 die Daten auf seiner Anzeigeeinheit anzeigt. Fig. 3a zeigt eine remote/entfernte Konstellation.

Der OTP Generator berechnet anhand der Ziffern-/Zahlenkombination nach einem geheimen Algorithmus, wie er oben in den Grundsätzen beschrieben wurde, das aktuell gültige OTP. Der Techniker überträgt das OTP auf den gesperrten Rechner. Damit wird der PC entsperrt und der Techniker kann seine Modifikationen durchführen.

Der OTP Generator/Algorithmus/Programm ist gegen Reverse-Engineerung geschützt, in dem das Programm verschlüsselt ist, und nur teilweise während der Abarbeitung entschlüsselt wird.

Eine bevorzugte Implementierung besteht daher aus einem CrypTA (Crypto-Stick) geschützten Programm, da dadurch die Verbreitung und Nutzbarkeit des OTP Generators gesteuert werden kann. Eine Ausführung ist nur möglich mit dem Crypto-Stick. Der Stick ist weiterhin so konfiguriert, dass seine Gültigkeit auf 3 Monate beschränkt ist. Danach muss die Gültigkeit über eine zentrale Stelle verlängert werden. Dies kann durch entsprechende Zertifikate oder Timer innerhalb des Crypto-Prozessors geregelt werden. Die Schlüssel liegen auf dem Crypto-Stick.

Vorzugsweise sollten für eine Realisierung asymmetrische Verfahren zum Einsatz kommen. Der ATM verfügt über den öffentlichen Schlüssel, mit dem das OTP verifiziert werden kann. Der geheime Schlüssel befindet sich somit nur in dem speziell CrypTA abgesicherten Programm und nicht in dem evtl. angegriffenen ATM.

Um weiterem Missbrauch vorzubeugen enthält das OTP Informationen über die Identität der OTP Generator Kopie oder dessen Nutzer. Beispielsweise kann dieses die ID des CrypTA Sticks sein. Das OTP, bzw. eine Auswahl der darin enthaltenen Informationen werden mit der Uhrzeit/Datum der Eingabe des OTP vom BIOS persistent als Liste der letzten n Entsperrungen gespeichert (n ist eine natürliche Zahl). Dadurch kann in einem Problemfall nachvollzogen werden, wer am PC manipuliert hat. Vorzugsweise können diese Informationen auch über ein Programm, das auf dem installierten Betriebssystems läuft, abgefragt werden.

Die obige Beschreibung widerspricht auch nicht einer remote Anwendung dieses Prinzips, dass die Person vor Ort über Telefon oder Internet das OTP von einem Callcenter oder sonstiger zentraler Infrastruktur erfragt. In diesem Fall sollte jedoch eine Authentifizierung des Anfragenden erfolgen. Eine entsprechende Darstellung ist in Fig. 3b zu sehen.

Die Uhrzeit-/Datumsangaben in der Ziffern-/Zahlenkombination werden dafür verwendet, dass die OTP jeweils nur einen definierten Zeitraum gültig sind, beispielsweise wenige Stunden oder einen Tag. Dadurch wird vermieden, dass das OTP später noch einmal verwendet werden kann, um den Bootschutz zu umgehen, beispielsweise durch eine andere Person, die dieses OTP erspäht hat.

In einer sicherheitstechnisch verbesserten Ausführung setzt das BIOS/(U)EFI veränderte Booteinstellungen automatisch für den nächsten Bootvorgang oder nach einer definierten Mindestzeitspanne zurück. Damit wird dem Fall vorgebeugt, dass ein Techniker vergisst nach seinem Servicefall die Einstellungen wieder auf die normalen Werte zurückzusetzen.

Eine Alternative hierzu ist, dass ein Zurücksetzen der Booteinstellungen und/oder des PW Schutzes generell bei jedem Booten durch die Software durchgeführt wird, die auf der Harddisk im PC installiert ist. Dieses ist insbesondere dann interessant, wenn der Techniker nach Eingabe des OTPs die Notwendigkeit eines Passwortes generell ausschaltet.

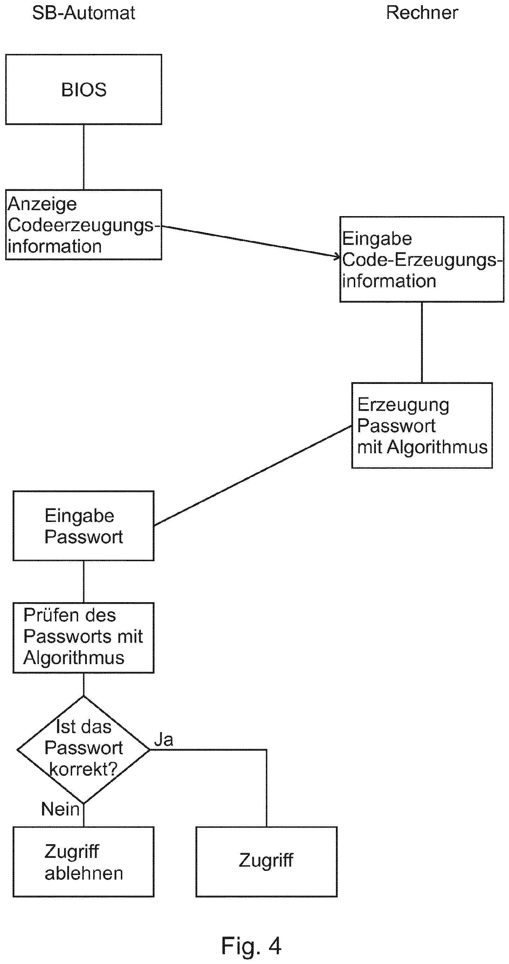

Die Fig. 4 zeigt das Verfahren wie es auf dem SB-Automaten und dem Rechner abgearbeitet wird. Es erfolgt ein BIOS-Aufruf auf dem SB-Automat. Dieser zeigt Codeerzeugungs-Informationen an. Diese werden auf einem Rechner eingegeben, der mit Hilfe des Crypto-Sticks und des Algorithmus das Passwort berechnet. Das Passwort wird dann in den SB-Automaten eingegeben. Es erfolgt eine Prüfung auf dem SB-Automaten. Falls das Passwort zulässig ist wird ein Zugriff gewährt, andernfalls wird der Zugriff abgelehnt.

## Patentansprüche

1. Verfahren zur Steuerung des Zugriffs auf das BIOS/(U)EFI oder von Teilfunktionen des BIOS eines SB-Automaten, wobei das Passwort des BIOS über einen deterministischen Algorithmus berechnet wird, in den über die Zeit verändernde Codeerzeugungs-Informationen einfließen, umfassend die Schritte:
- Anzeigen von den sich über die Zeit verändernden Codeerzeugungs-Informationen auf einem Bildschirm des SB-Automaten bei einem Zugriff auf das BIOS des SB-Automaten;
- Eingabe der Codeerzeugungs-Informationen in ein Programm auf einem zweiten Computer, der ebenfalls den deterministischen Algorithmus zur Berechnung des Passworts für das BIOS aufweist, und Berechnen und Anzeigen des Passworts auf dem zweiten Computer;
- Eingabe des Passworts auf dem SB-Automaten, und Überprüfung des Passworts durch den deterministischen Algorithmus, um bei einem richtigen Passwort den Zugriff auf das BIOS zu erlauben,
wobei das BIOS/(U)EFI veränderte Booteinstellungen automatisch für den nächsten Bootvorgang oder nach einer definierten Mindestzeitspanne zurücksetzt;
und/oder
wobei das BIOS ein Zurücksetzen der Booteinstellungen und/oder des PW Schutzes generell bei jedem Booten auf die Standardeinstellungen vornimmt.

2. Das Verfahren nach dem vorhergehenden Anspruch, wobei die Codeerzeugungs-Informationen eine Ziffern-/Zahlenkombination ist, die aus einem oder mehreren der folgenden Komponenten zusammengesetzt ist: der Seriennummer-ID des SB-Automaten, der Uhrzeit, dem Datum, Hardwaremerkmalen des SB-Automaten.

3. Das Verfahren nach dem vorhergehenden Anspruch, wobei das Programm auf dem zweiten Computer auf einem Crypto-Stick oder einem Hardware-Dongle abgelegt ist, der das Programm verschlüsselt speichert und/oder wobei vorzugsweise das Programm auf dem zweiten Computer nur ausgeführt werden kann, wenn der Crypto-Stick oder ein Hardware-Dongle mit dem zweiten Computer verbunden ist, damit sich das Programm selber in Teilen oder vollständig entschlüsseln kann.

4. Das Verfahren nach dem vorhergehenden Anspruch, wobei zusätzlich bei der Erzeugung des Passworts ein asymmetrisches Verschlüsselungsverfahren oder Signaturverfahren zum Einsatz kommt, wobei der SB-Automat über den öffentlichen Schlüssel verfügt, mit dem das Passwort verifiziert werden kann, wobei sich der geheime Schlüssel auf dem abgesicherten Crypto-Stick oder dem Hardware-Dongle befindet, auf den das Programm Zugriff hat.

5. Das Verfahren nach einem oder mehreren der vorhergehenden Ansprüche, wobei durch das Passwort folgende Funktionen freigegeben werden:
- Zugang in die BIOS/(U)EFI Einstellungen
- Ändern der Art des Passwortzugangs zu den BIOS/(U)EFI Einstellungen
- Ändern der Bootreihenfolge, bzw. generelle Ermöglichung des Bootens von externen Speichermedien.

6. Das Verfahren nach einem oder mehreren der vorhergehenden Ansprüche, wobei das Passwort Informationen über die Identität des Programms oder dessen Nutzers enthält.

7. Das Verfahren nach einem oder mehreren der vorhergehenden Ansprüche, wobei das Passwort über Telefon oder das Internet von einem Callcenter oder sonstiger zentraler Infrastruktur abgefragt wird.

8. Das Verfahren nach einem oder mehreren der vorhergehenden Ansprüche, wobei das Passwort nur einen definierten Zeitraum gültig ist und/oder eine bestimmte Anzahl von Bootvorgängen, beispielsweise wenige Stunden oder einen Tag und/oder einen Bootvorgang.

9. SB-Automat
- mit einem BIOS, das mit einem Passwortschutz versehen ist, um eine Steuerung des Zugriffs auf das BIOS oder von Teilfunktionen des BIOS zu ermöglich,
wobei das Passwort des BIOS über einen deterministischen Algorithmus berechnet wird, in den über die Zeit verändernde Codeerzeugungs-Informationen einfließen,
- mit einer Anzeige, auf dem bei einem Zugriff auf das BIOS sich über die Zeit verändernde Codeerzeugungs-Informationen angezeigt werden, die in die Berechnung des Passworts einfließen;
- Eingabemittel, die die Eingabe des Passworts erlauben, wobei das Passwort, das auf einem zweiten Rechner mit Hilfe der Codeerzeugungs-Informationen berechnet wurde, überprüft wird, in dem die angezeigten Codeerzeugungs-Informationen in einen deterministischen Algorithmus einfließen, sodass ein Passwort zulässig ist, das sich über die Zeit verändert;
wobei das BIOS/(U)EFI veränderte Booteinstellungen automatisch für den nächsten Bootvorgang oder nach einer definierten Mindestzeitspanne zurücksetzt;
und/oder wobei Mittel vorhanden sind, durch die das BIOS ein Zurücksetzen der Booteinstellungen und/oder des PW Schutzes generell bei jedem Booten auf die Standardeinstellungen vornimmt.

10. SB-Automat nach dem vorhergehenden Anspruch, wobei die Codeerzeugungs-Informationen eine Ziffern-/Zahlenkombination ist, die aus einem oder mehreren der folgenden Komponenten zusammengesetzt ist: der Seriennummer-ID des SB-Automaten, der Uhrzeit, dem Datum, Hardwaremerkmalen des SB-Automaten.

11. SB-Automat nach dem vorhergehenden Anspruch, wobei zusätzlich das Passwort durch einen privaten Schlüssel signiert wurde, wobei der SB-Automat über den öffentlichen Schlüssel verfügt, mit dem das Passwort verifiziert werden kann.

12. SB-Automat nach einem oder mehreren der vorhergehenden SB-Automat-Ansprüche, wobei durch das Passwort folgende Funktionen freigegeben werden:
- Zugang in die BIOS/(U)EFI Einstellungen
- Ändern der Art des Passwortzugangs zu den BIOS/(U)EFI Einstellungen
- Ändern der Bootreihenfolge, bzw. generelle Ermöglichung des Bootens von externen Speichermedien.

13. SB-Automat nach einem oder mehreren der vorhergehenden SB-Automat- Ansprüche, wobei das Passwort Informationen über die Identität dessen Nutzers und/oder des Programms, das das Passwort berechnet hat, enthält.

14. SB-Automat nach einem oder mehreren der vorhergehenden SB-Automat- Ansprüche, wobei das Passwort über Telefon oder das Internet von einem Callcenter oder sonstiger zentraler Infrastruktur abfragbar ist, oder durch ein Programm auf einem weiteren Rechner berechenbar ist.

15. SB-Automat nach einem oder mehreren der vorhergehenden SB-Automat- Ansprüche,
wobei Mittel vorhanden sind, durch die das Passwort nur einen definierten Zeitraum gültig ist und/oder eine bestimmte Anzahl von Bootvorgängen gültig ist.

## Claims

1. Method for controlling access to the BIOS/(U)EFI or for controlling subfunctions of the BIOS of a self-service machine, wherein the password of the BIOS is computed by means of a deterministic algorithm in which code generation information that varies over time is used, comprising the steps of:
- displaying the code generation information that varies over time on a screen of the self-service machine in the event of access to the BIOS of the self-service machine;
- inputting the code generation information into a program on a second computer, which likewise has the deterministic algorithm for computing the password for the BIOS, and computing and displaying the password on the second computer;
- inputting the password on the self-service machine, and checking the password by means of the deterministic algorithm in order to permit access to the BIOS if the password is correct,
wherein the BIOS/(U)EFI automatically resets altered boot settings for the next boot operation or after a defined minimum period of time;
and/or
wherein the BIOS performs a reset for the boot settings and/or for the PW protection generally to standard settings on every boot.

2. Method according to the preceding claim, wherein the code generation information is a digit/number combination made up of one or more of the following components: the serial number ID of the self-service machine, the time of day, the date, hardware features of the self-service machine.

3. Method according to the preceding claim, wherein the program on the second computer is stored on a crypto stick or a hardware dongle storing the program in encrypted fashion
and/or wherein preferably the program on the second computer can be executed only if the crypto stick or a hardware dongle is connected to the second computer so that the program can decrypt itself in part or completely.

4. Method according to the preceding claim, wherein additionally the generation of the password involves an asymmetric encryption method or signature method being used, wherein the self-service machine has the public key that can be used to verify the password, wherein the secret key is on a protected crypto stick or the hardware dongle to which the program has access.

5. Method according to one or more of the preceding claims, wherein the password enables the following functions:
- access to the BIOS/(U) EFI settings
- changing the type of password access for the BIOS/(U) EFI settings,
- changing the boot sequence, or generally allowing booting from external storage media.

6. Method according to one or more of the preceding claims, wherein the password contains information about the identity of the program or the user thereof.

7. Method according to one or more of the preceding claims, wherein the password is requested from a call centre or other central infrastructure by telephone or via the Internet.

8. Method according to one or more of the preceding claims, wherein the password is valid only for a defined period and/or for a particular number of boot operations, for example for a few hours or one day and/or one boot operation.

9. Self-service machine
- having a BIOS provided with password protection in order to allow control of access to the BIOS or of subfunctions of the BIOS,
wherein the password of the BIOS is computed by means of a deterministic algorithm in which code generation information that varies over time is used,
- having a display on which, in the event of access to the BIOS, code generation information that varies over time is displayed that is used in the computation of the password;
- input means permitting input of the password, wherein the password that has been computed on a second computer by using the code generation information is checked, in which the displayed code generation information is used in a deterministic algorithm, so that a password is admissible that varies over time;
wherein the BIOS/(U)EFI automatically resets altered boot settings for the next boot operation or after a defined minimum period of time;
and/or wherein means are present by means of which the BIOS performs a reset for the boot settings and/or for the PW protection generally to the standard settings on every boot.

10. Self-service machine according to the preceding claim, wherein the code generation information is a digit/number combination made up of one or more of the following components: the serial number ID of the self-service machine, the time of day, the date, hardware features of the self-service machine.

11. Self-service machine according to the preceding claim, wherein additionally the password has been signed by a private key, wherein the self-service machine has the public key that can be used to verify the password.

12. Self-service machine according to one or more of the preceding self-service machine claims, wherein the password enables the following functions:
- access to the BIOS/(U)EFI settings
- changing the type of password access for the BIOS/(U)EFI settings
- changing the boot sequence, or generally allowing booting from external storage media.

13. Self-service machine according to one or more of the preceding self-service machine claims, wherein the password contains information about the identity of the user thereof and/or of the program that computed the password.

14. Self-service machine according to one or more of the preceding self-service machine claims, wherein the password is requestable from a call centre or other central infrastructure by telephone or via the Internet, or is computable by a program on a further computer.

15. Self-service machine according to one or more of the preceding self-service machine claims,
wherein means are present by means of which the password is valid only for a defined period and/or is valid for a particular number of boot operations.

## Revendications

1. Procédé de commande de l'accès au BIOS/(U)EFI ou de sous-fonctions du BIOS d'une machine automatique en libre service, le mot de passe du BIOS étant calculé par le biais d'un algorithme déterministe incorporant des informations de génération de code variant dans le temps, le procédé comprenant les étapes suivantes :
- afficher des informations de génération de code variant dans le temps sur un écran de la machine automatique en libre service lors d'un accès au BIOS de la machine automatique en libre service ;
- entrer les informations de génération de code dans un programme sur un deuxième ordinateur qui comporte également l'algorithme déterministe pour calculer le mot de passe du BIOS, et calculer et afficher le mot de passe sur le deuxième ordinateur ;
- entrer le mot de passe sur la machine en libre-service et vérifier le mot de passe à l'aide de l'algorithme déterministe afin de permettre l'accès au BIOS avec un mot de passe correct,
le BIOS/(U) EFI réinitialisant automatiquement des paramètres de démarrage modifiés pour le prochain démarrage ou après un intervalle de temps minimal défini ;
et/ou
le BIOS réinitialisant généralement les paramètres de démarrage et/ou la protection par mot de passe à chaque démarrage avec les paramètres par défaut.

2. Procédé selon la revendication précédente, les informations de génération de code étant une combinaison de chiffres/nombres composée d'au moins un des composants suivants : le numéro de série ID de la machine automatique en libre service, l'heure, la date, les caractéristiques matérielles de la machine automatique en libre service.

3. Procédé selon la revendication précédente, le programme étant stocké sur le deuxième ordinateur sur une clé cryptographique ou une clé de protection matérielle qui mémorise le programme sous forme cryptée et/ou le programme ne pouvant de préférence être exécuté que sur le deuxième ordinateur si la clé cryptographique ou une clé de protection matérielle est connectée au deuxième ordinateur pour que le programme lui-même puisse effectuer un décryptage complet ou partiel.

4. Procédé selon la revendication précédente, un procédé de cryptage asymétrique ou un procédé de signature étant utilisé en plus lors de la génération du mot de passe, la machine automatique en libre service disposant de la clé publique avec laquelle le mot de passe peut être vérifié, la clé privée se trouvant sur la clé cryptographique sécurisée ou la clé de protection matérielle auxquelles le programme a accès.

5. Procédé selon une ou plusieurs des revendications précédentes, les fonctions suivantes étant libérées par le mot de passe :
- accès aux paramètres BIOS/(U)EFI
- modification du type d'accès par mot de passe aux paramètres BIOS/(U)EFI
- modification de l'ordre de démarrage ou de la possibilité générale du démarrage à partir de supports de stockage externes.

6. Procédé selon une ou plusieurs des revendications précédentes, le mot de passe contenant des informations concernant l'identité du programme ou de son utilisateur.

7. Procédé selon une ou plusieurs des revendications précédentes, le mot de passe étant interrogé par téléphone ou par Internet à partir d'un centre d'appels ou d'une autre infrastructure centrale.

8. Procédé selon une ou plusieurs des revendications précédentes, le mot de passe n'étant valide que pour un intervalle de temps défini et/ou un nombre déterminé de processus de démarrage, par exemple quelques heures ou un jour et/ou un processus de démarrage.

9. Machine automatique en libre service comprenant
- un BIOS protégé par mot de passe pour permettre la commande de l'accès au BIOS ou de fonctions partielles du BIOS, le mot de passe du BIOS étant calculé par le biais d'un algorithme déterministe dans lequel entrent des informations de génération de code variant dans le temps,
- un moyen d'affichage sur lequel des informations de génération de code variant dans le temps, qui entrent dans le calcul du mot de passe, sont affichées lors d'un accès au BIOS ;
- un moyen d'entrée permettant l'entrée du mot de passe, le mot de passe étant vérifié, lequel a été calculé à l'aide des informations de génération de code sur un deuxième ordinateur dans lequel les informations de génération de code affichées entrent dans un algorithme déterministe de manière à autoriser un mot de passe qui varie dans le temps ;
le BIOS/(U)EFI réinitialisant automatiquement des paramètres de démarrage modifiés pour le prochain démarrage ou après un intervalle de temps minimal défini ;
et/ou des moyens étant prévus qui permettent au BIOS de réinitialiser les paramètres de démarrage et/ou la protection par mot de passe généralement à chaque démarrage avec les paramètres par défaut.

10. Machine automatique en libre service selon la revendication précédente, les informations de génération de code étant une combinaison de chiffres/nombres qui est composée d'au moins un des composants suivants : le numéro de série ID de la machine automatique en libre service, l'heure, la date, les caractéristiques matérielles de la machine en libre-service.

11. Machine automatique en libre service selon la revendication précédente, le mot de passe ayant en outre été signé par une clé privée, la machine automatique en libre service disposant de la clé publique avec laquelle le mot de passe peut être vérifié.

12. Machine automatique en libre service selon une ou plusieurs des revendications précédentes relatives à la machine automatique en libre service, les fonctions suivantes étant libérées par le mot de passe :
- accès aux paramètres BIOS/(U)EFI
- modification du type d'accès par mot de passe aux paramètres BIOS/(U)EFI
- modification de l'ordre de démarrage ou de la possibilité générale du démarrage à partir de supports de stockage externes.

13. Machine automatique en libre service selon une ou plusieurs des revendications précédentes relatives à la machine automatique en libre service, le mot de passe contenant des informations sur l'identité de l'utilisateur et/ou du programme qui a calculé le mot de passe.

14. Machine automatique en libre service selon une ou plusieurs des revendications précédentes relatives à la machine automatique en libre service, le mot de passe étant interrogé par téléphone ou par Internet à partir d'un centre d'appels ou d'une autre infrastructure centrale, ou pouvant être calculé par un programme situé sur un autre ordinateur.

15. Machine automatique en libre service selon une ou plusieurs des revendications précédentes relatives à la machine automatique en libre service,
des moyens étant prévus qui permettent de valider le mot de passe seulement pour un intervalle de temps défini et/ou de valider un nombre déterminé de démarrages.
